# EUROPEAN PATENT APPLICATION

(11) **EP 4 197 856 A1**
(43) Date of publication of application: **21.06.2023**
(21) Application number: 22213405.8
(22) Date of filing: 14.12.2022
(51) Int. Cl.: B60N 2/60, B60N 2/56

(54) **A VENTILATION MAT FOR A VEHICLE**

(30) Priority: 16.12.2021 IN 202121058617
(71) Applicant: Faurecia India Private Limited, Bhosari, Pune 411026 (IN)
(72) Inventor: MAHAJAN, Manthan, 411027 Pune (IN); JOSHI, Mandar, 411021 Pune (IN)
(74) Representative: Lavoix

(57) **Abstract**

The present invention discloses a ventilation mat (100) for a vehicle seat. The mat (100) includes a seat pan portion (110) and a seat back portion (120) configured to accommodate on a respective seat pan and a seat back of the vehicle seat. At least one of the portions (110, 120) include a plurality of partition walls (130) spaced-apart such that it creates one or more air channel (140) therebetween which is adapted for receiving an air flow from an air supply unit (150). A tube (150-1) with one or more opening (150-2) is arranged between the seat pan portion (110) and a seat back portion (120) for supplying the air flow into the one or more air channel (140). The plurality of partition walls (130) is substantially parallel to each other and parallel to the longitudinal direction of the seat pan portion (110) and/or the seat back portion (120).

## Description

### Field of the invention

The present invention relates to a ventilation mat. More particularly, the present invention relates to a ventilation mat configurable on a vehicle seat.

### Background of the invention

Ventilated seats in a vehicle are designed to enhance occupant comfort by passing air through the covering of the seat. In warm weather the ventilated seats can assist in cooling and reducing sweating of the occupant. Similarly, in cold weather, ventilated seats can help warm the occupant if heated air is forced through the seat or the seat covering. Currently ventilated seats are available only in luxury vehicle and has a lot of complex mechanism inside the seats to provide the required cooling or warm effects.

Hence ventilation mats are introduced which can be accommodated on the vehicle seats as an additional accessory. These mats may be equipped with fan or blower which can be electrically connected to an interior panel of the vehicle. Traditional mats which are used as an aftermarket accessory for vehicles are not easy to assemble for different seat designs and have wired connection upon which control is provided for switching on and off as well as for the speed control of the blower. It is difficult to locate the switch which is placed either on the trim of mats or on a controller placed along the wire. Also, the current design doesn't allow the flow to cover maximum portion of the human body.

The existing mats also include physical buttons on the mat itself or on the wire connecting the cigarette lighter. Several other variations in this kind of buttons can be seen in different products such as fabric embedded switches, touch buttons, hard buttons beneath fabrics, etc. Giving attention to the physical buttons while on drive causes distraction for either the passenger or even the driver.

Hence, there is a requirement of a ventilation mat for a vehicle that can overcome one or more drawbacks of the existing ventilation mats.

### Objects of the invention

An object of the present invention is to provide a ventilation mat for a vehicle, which can be easy releasably assemble on any vehicle seat configuration.

Another object of the present invention is to provide a ventilation mat for a vehicle, which can be operated and controlled wirelessly.

Further object of the present invention is to provide a ventilation mat for a vehicle, which can be operated by gesture controls configured in a smart phone application.

Further object of the present invention is to provide a ventilation mat for a vehicle, which is compact and simple to use.

Yet another object of the present invention is to provide a ventilation mat for a vehicle, which is simple and cost-effective.

### Summary of the invention

According to the present invention, there is provided a ventilation mat for a vehicle. In an aspect of the invention, the ventilation mat may include a seat pan portion and a seat back portion. The seat pan portion and the seat back portion is arranged to accommodate on a respective seat pan and seat back of the vehicle. In the present embodiment, the seat pan portion and the seat back portion are connected together forming a live hinge along a fold line. The fold line defines the intersection of both the seat pan portion and the seat back portion.

Further, the seat pan portion and the seat back portion may include a plurality of partition walls spaced-apart substantially parallel to each other. The partition walls create one or more air channels therebetween for receiving an air flow. In one aspect of the invention, the partition wall may be made up of polyurethane (PU) material such that in between two adjacent partition walls air channels are configured to channel the airflow therethrough. In an alternative embodiment, the partition wall may be adapted to configure an inflated position and a deflated position, wherein in the inflated position, in between two adjacent partition walls air channels are configured to channel the airflow therethrough. The inflated position and the deflated position of the partition wall is controlled by a manual pump or by an electric/auto pump. In the inflated position, the partition walls act as a cushion for the occupant. The air flow through the air channels provides surface ventilation to the occupant. The surface ventilation means that, the air flow flows parallel to the surface of the seat pan cushion and/or seat back cushion in the air channels. In an embodiment, the partition walls and the air channels can be parallel to the longitudinal direction of the seat back portion and the seat pan portion of the ventilation mat.

In an embodiment, the seat pan portion and the seat back portion can be fluidably connected to an air supply unit. Specifically, the air channels of the seat pan portion and/or the seat back portion is adapted to receive an air flow from the air supply unit. In the present embodiment, a tube with one or more opening is arranged between the seat pan portion and a seat back portion for supplying the air flow into and/or along the one or more air channel. The air supply unit channels the air through the air channels. The air supply unit can be controlled by a control unit to supply air flow into the one or more air channel. In an embodiment, the control unit can be integrated to the ECU of the vehicle or a separate system. In another embodiment, the control unit can be a mobile phone or a smart phone or a similar device.

In an embodiment the air supply unit is arranged at a hinge or joint between the seat pan portion and the seat back portion. Specifically, along the fold line of the seat pan portion and the seat back portion. In an embodiment, the air supply unit is an axial fan. Further, the ventilation mat includes a microcontroller to receive signals from the control unit to control or regulate air flow from the air supply unit. In an embodiment, the control unit is a wireless controller which is wirelessly connected to the microcontroller of the ventilation mat. The air supply unit is controlled wirelessly by the control unit to supply air through the channel. In an embodiment, the control unit may use gesture control to activate the operation of the air supply unit.

In another embodiment, the air supply unit is an air vent of an HVAC unit which can be connected to the ventilation mat. Further, the partition walls may be deflated to fold the ventilation mat. The inflated position and a deflated position of the ventilation mat is controlled by the manual pump or by the electric/auto pump. In an embodiment, the partition walls are made up of foam material like polyurethane (PU) foam.

### Brief Description of drawings

Figure 1 illustrates a schematic view of a ventilation mat for a vehicle in accordance with the present invention;
Figures 2a and 2b illustrates the inflated position and deflated position of the partition walls;
Figure 3 illustrates a block diagram showing the connection of microcontroller with the ventilation mat; and
Figure 4 illustrates a block diagram showing another embodiment of the present invention.

### Detailed description of the invention

An embodiment of this invention, illustrating its features, will now be described in detail. The words "comprising," "having," "containing," and "including," and other forms thereof, are intended to be equivalent in meaning and be open-ended in that an item or items following any one of these words is not meant to be an exhaustive listing of such item or items or meant to be limited to only the listed item or items.

The terms "first," "second," and the like, herein do not denote any order, quantity, or importance, but rather are used to distinguish one element from another, and the terms "a" and "an" herein do not denote a limitation of quantity, but rather denote the presence of at least one of the referenced items.

The disclosed embodiments are merely exemplary of the invention, which may be embodied in various forms.

The present invention relates to a ventilation mat for a vehicle. Traditional mats which are used as an aftermarket accessory for vehicles have wired connection upon which control is provided for switching on and off as well as for the speed control of the blower. The existing mats also include physical buttons wither on the mat itself or on the wire connecting the cigarette lighter and the mat. Giving attention to the physical buttons while on drive causes distraction for either the passenger or even the driver. Hence there is a requirement of a ventilation mat which can overcome the existing mats. The provided ventilation mat can control the functions of the ventilation mat without physical interaction.

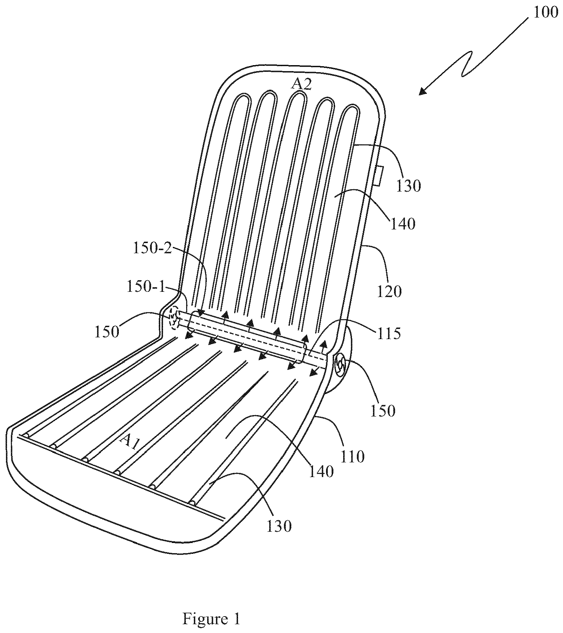

Referring now to figure 1, a ventilation mat (100) for a vehicle in accordance with the present invention is illustrated. The ventilation mat (100) can be releasably assemble/accommodated on a vehicle seat. The ventilation mat (100) includes a seat pan portion (110) and a seat back portion (120). The seat pan portion (110) and the seat back portion (120) is configured to accommodate on a respective seat pan and seat back of the vehicle. In the present embodiment, the seat pan portion (110) and the seat back portion (120) are connected together forming a live hinge along a fold line (115). The fold line (115) defines the intersection of both the seat pan portion (110) and the seat back portion (120).

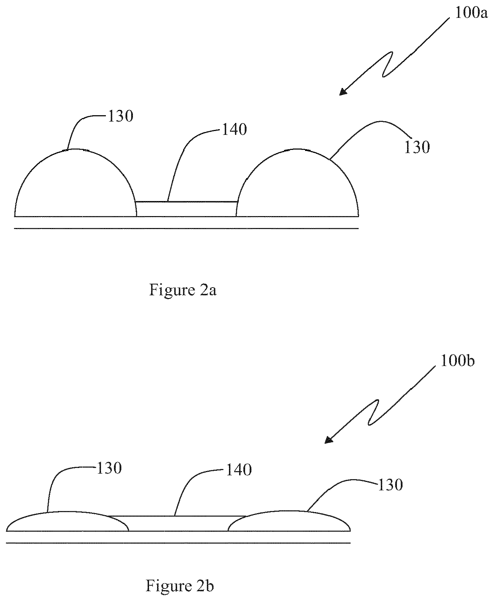

Further, the seat pan portion (110) and the seat back portion (120) includes a plurality of partition walls (130) spaced-apart substantially parallel to each other. The partition walls (130) create one or more air channels (140) therebetween for receiving an air flow. Specifically, the partition wall (130) is adapted to configure an inflated position (100a) (figure 2a) and a deflated position (100b) (figure 2b), wherein in the inflated position (100a), between two adjacent partition walls (130), air channels (140) are configured to channel the airflow therethrough. In the inflated position (100a), the partition walls (130) act as a cushion for the occupant as shown in figure 2a. The air flow through the air channels (140) provides surface ventilation to the occupant. The inflated position (100a) and the deflated position (100b) of the partition wall (130) are controlled by a manual pump (190) or by an electric/auto pump (190). The pump is connected to an air supply unit (150). Specifically, the pump (190) is actuated or turned ON to inflate the partition walls (130) and when the pump (190) is turned OFF, the partition walls (130) deflate.

In an alternative embodiment, the partition walls (130) are made up of polyurethane (PU) material such that in between two adjacent partition walls (130), the air channels (140) are configured to channel the airflow therethrough. Specifically, the airflow flows parallelly to the seat pan cushion and/or seat back cushion.

The partition walls (130) are layers which creates the air channels (140) in between. Specifically, the partition walls (130) are intermediate layers which creates two or more adjacent air channels (140). In the present embodiment, the partition walls (130) and the air channels (140) are parallel to the longitudinal direction (A1, A2) of the seat back portion (120) and/or the seat pan portion (110) of the ventilation mat (100). By way of non-limiting example, the partition walls (130) and the air channels (140) are arranged substantially parallel to the seating posture of an occupant. Specifically, the partition walls (130) are hollow elongated cavities which inflate upon passing the air therethrough using the pump (190). In the inflated position (100a) of the partition walls (130), the ventilation mat (100) configures a corrugated shape as shown in figure 2a. In another embodiment, the partition walls are made up of polyurethane (PU) material such that in between two adjacent partition walls (130), air channel(s) (140) are configured to channel the airflow therethrough. It may be obvious to a person skilled in the art to use any impermeable material for making the partition walls (130).

In one aspect of the invention, the partition walls (130) are made of non-porous/impermeable material such as leather or vinyl and the like. Once the partition wall (130) is inflated, air will not go outside the partition wall (130). The material for the air channels (140) are impermeable which provides surface ventilation when an occupant sat on the ventilation mat (100).

In the present embodiment, the seat pan portion (110) and the seat back portion (120) are fluidably connected to an air supply unit (150). Specifically, the air channels (140) of the seat pan portion (110) and/or the seat back portion (120) is adapted to receive an air flow from the air supply unit (150). The air supply unit (150) can be an axial fan (150a) or an HVAC air vent (150b) for suppling the airflow into the air channels (140). The partition walls are inflated by using the manual or electric/pump (190).

In the present embodiment, a tube (150-1) with one or more opening (150-2) is arranged between the seat pan portion (110) and a seat back portion (120) for supplying the air flow into the one or more air channel (140). One end of the tube (150-1) is connected to the air channels (140) through the openings (150-2) of the tube (150-1) and the other end of the tube (150-1) is positioned adjacent to the air supply unit (150). The air flows through the tube (150-1) and reaches the air channels (140) upon actuation of the air supply unit (150). Similarly, the partition walls (130) are connected to the pump (190) through another set of tubes (not shown). The partition walls (130) are inflated when the pump (190) is actuated.

The air supply unit (150) channels the air through the air channels (140). Specifically, when the partition wall (130) is in the inflated position (100a) and upon actuation of the air supply unit (150) the air flows into and/or along the one or more air channel (140) of the ventilation mat (100). The air supply unit (150) provides smooth and effective air flow into and along the one or more air channels (140).

The air supply unit (150) is controlled by a control unit (200) to supply air flow into and/or along the one or more air channel (140). In an embodiment, the control unit (200) can be integrated to the ECU of the vehicle. The interior panel may have an operating switch to activate the control unit (200). In another embodiment, the control unit (200) can be a mobile phone or a smart phone or a similar device.

In an embodiment as shown in figure 1, the air supply unit (150) is arranged at a hinge or joint between the seat pan portion (110) and the seat back portion (120). Specifically, along the fold line (115) of the seat pan portion (110) and the seat back portion (120). In the present embodiment, the air supply unit (150) is the axial fan (150a). Two such axial fans (150a) are arranged along the fold line (115) of the ventilation mat (100). A first axial fan providing air supply towards the seat pan portion (110) and a second axial fan providing air supply towards the seat back portion (120) for example by arranging air baffle divider (not shown) into the tube (150-1). In an alternative embodiment, a one or more fans can be arranged to supply air floor into the air channels (140) of both the seat pan portion (110) and the seat back portion (120).

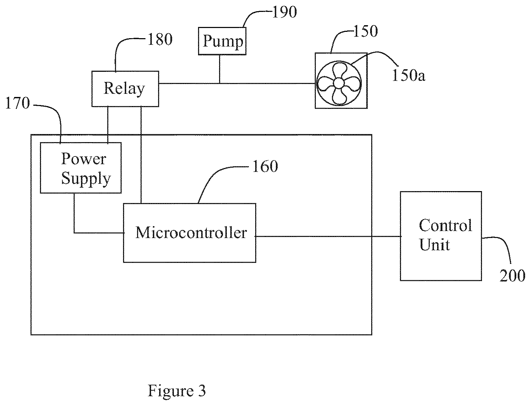

Further referring to figure 3, the ventilation mat (100) includes a microcontroller (160) to receive signals from the control unit (200) to control and/or regulate air flow from the air supply unit (150). In the present embodiment, the control unit (200) is a wireless controller which is wirelessly connected to the microcontroller (160) of the ventilation mat (100). The air supply unit (150) is controlled wirelessly by the control unit (200) to supply air flow into and/or along the one or more air channel (140). In the present embodiment, the micro controller is arranged adjacent to the air supply unit (150) and is capable of switching ON or OFF relays (180) connected to a power supply (170) of the air supply unit (150) thereby controlling the air supply towards the partition walls (130) and the air channels (140). The micro controller can also regulate the speed of the axial fans thereby controlling the air flow through the air channels (140).

In an embodiment, the pump (190) is configured separately to inflate and deflate the partition walls (130). The pump (190) can be wirelessly controlled by the control unit (200). The pump (190) can be a manual pump (190) or an electric/auto pump (190).

In the present embodiment, the control unit (200) may use gesture control to activate the operation of the air supply unit (150). For example, the control unit (200) can control the speed of the axial fan using the gesture control. The gestures are predefined within the control unit (200). In the present embodiment, the wireless controller is a Bluetooth controller (like a smart phone or similar device) which can wirelessly connect with the microcontroller (160) embedded within the ventilation mat (100).

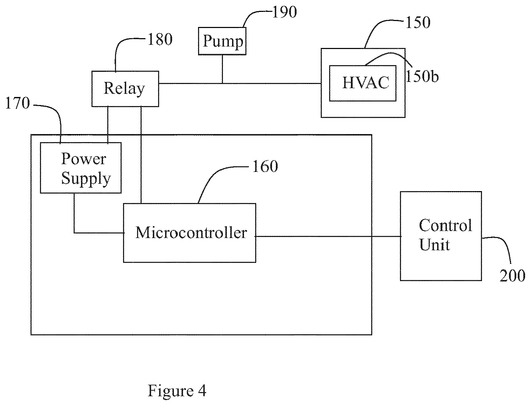

In another embodiment as shown in figure 4, the air supply unit (150) is an air vent of an HVAC unit (150b) which can be connected to the ventilation mat (100). The HVAC unit (150b) may have connecting pipes which can be connected to the tube (150-1) of the ventilation mat (100). The control unit (200) can control the HVAC unit (150b) to provide variable temperature effects on the ventilation mat (100). For example, the occupant can in warm weather provide supply cool air through the ventilation mat (100) to reduces sweating of the occupant. Similarly, in cold weather, the ventilation mat (100) can help warm the occupant if heated air is forced through the air channels (140) of the ventilation mat (100).

In case of smart phones, the user may have to install a software application to connect with the ventilation mat (100). The software application can be used to control the air flow from the air supply unit (150) either by reducing or increasing the speed of the axial fan or by switching ON or OFF the air supply unit (150). The smart phone can control the inflation and deflation of the partition walls (130). The smart phone application can use gesture control for operating the various functions of the ventilation mat (100).

In an embodiment, the partition walls (130) are deflated by the air supply unit (150) to carry out folding of the ventilation mat (100). The control unit (200) controls the air supply unit and the pump (190) to deflate the air from the partition walls (130) to fold the ventilation mat (100) along the fold line (115).

Therefore, the present invention has an advantage of providing a ventilation mat (100) for a vehicle. The ventilation mat (100) can be operated and controlled wirelessly. The ventilation mat (100) can be operated by gesture controls configured in a smart phone application. Further the ventilation mat (100) is compact and simple to use. Also, it is cost-effective and robust in construction.

The foregoing descriptions of specific embodiments of the present invention have been presented for purposes of illustration and description. They are not intended to be exhaustive or to limit the present invention to the precise forms disclosed, and obviously, many modifications and variations are possible in light of the above teaching. The embodiments were chosen and described to best explain the principles of the present invention and its practical application and to thereby enable others skilled in the art to best utilize the present invention and various embodiments with various modifications as are suited to the particular use contemplated. It is understood that various omissions and substitutions of equivalents are contemplated as circumstances may suggest or render expedient, but such omissions and substitutions are intended to cover the application or implementation without departing from the scope of the claims of the present invention.

## Claims

1. A ventilation mat (100) for a vehicle seat, the ventilation mat (100) comprising:
a seat pan portion (110) and a seat back portion (120) configured to accommodate on a respective seat pan and a seat back of the vehicle seat, being fluidly connectable to an air supply unit (150),
the seat pan portion (110) and/or the seat back portion (120) include a plurality of partition walls (130) spaced-apart such that the partition walls create one or more air channel (140) therebetween which is adapted for receiving an air flow from the air supply unit (150),
a tube (150-1) with one or more opening (150-2) is arranged between the seat pan portion (110) and a seat back portion (120) for supplying the air flow into the one or more air channel (140),
wherein the plurality of partition walls (130) is substantially parallel to each other and parallel to the longitudinal direction (A1, A2) of the seat pan portion (110) and/or the seat back portion (120) of the ventilation mat (100).

2. The ventilation mat (100) as claimed in claim 1, wherein the plurality of partition walls (130) is adapted to configure an inflated position (100a) and a deflated position (100b) such that when in the inflated position (100a) and upon actuation of the air supply unit (150) the air flows into and/or along the one or more air channel (140) of the ventilation mat (100).

3. The ventilation mat (100) as claimed in claim 1 or 2, wherein the air supply unit (150) is controlled by a control unit (200) to supply air flow into and/or along the one or more air channel (140) of the ventilation mat (100).

4. The ventilation mat (100) as claimed in any one of claims 1 to 3, wherein the ventilation mat (100) includes a microcontroller (160) to receive signals from the control unit (200) to control and/or regulate the air flow from the air supply unit (150).

5. The ventilation mat (100) as claimed in any one of claims 1 to 4, wherein the air supply unit (150) is arranged at a hinge joint or on a fold line between the seat pan portion (110) and the seat back portion (120).

6. The ventilation mat (100) as claimed in any one of claims 1 to 5, wherein the air supply unit (150) includes an axial fan (150a), the actuation of the axial fan (150a) is controlled by the control unit (200) wirelessly.

7. The ventilation mat (100) as claimed in any one of claims 1 to 6, wherein the tube (150-1) of the air supply unit (150) is connectable to an air vent of a HVAC unit (150b).

8. The ventilation mat (100) as claimed in any one of claims 1 to 7, wherein the control unit (200) is a remote controller such as a smart phone.

9. The ventilation mat (100) as claimed in any one of claims 1 to 8, wherein the partition walls (130) are hollow elongated cavities.

10. The ventilation mat (100) as claimed in any one of claims 1 to 9, wherein the inflated position (100a) and a deflated position (100b) of the partition wall (130) is controlled by a manual pump (190) or by an electric/auto pump (190).
